# EUROPÄISCHE PATENTSCHRIFT

(11) **EP 4 008 683 B1**
(45) Veröffentlichungstag und Bekanntmachung des Hinweises auf die Patenterteilung: **13.08.2025**
(21) Anmeldenummer: 21211661.0
(22) Anmeldetag: 01.12.2021
(51) Int. Cl.: B67C 7/00, B67C 3/24

(54) **VORRICHTUNG ZUM BEHANDELN MINDESTENS EINES BEHÄLTERS**
DEVICE FOR TREATING AT LEAST ONE CONTAINER
DISPOSITIF DE MANUTENTION D'AU MOINS UN RÉCIPIENT

(30) Priorität: 01.12.2020 DE 102020131818
(43) Veröffentlichungstag der Anmeldung: 08.06.2022
(73) Patentinhaber: KRONES AG, 93073 Neutraubling (DE)
(72) Erfinder: Schoenfelder, Markus, 93073 Neutraubling (DE); Landler, Bruno, 93073 Neutraubling (DE)
(74) Vertreter: Nordmeyer, Philipp Werner

(56) Entgegenhaltungen:
- EP-A1- 3 578 483
- EP-B1- 1 268 161
- DE-A1- 102016 106 378
- DE-A1- 19 654 350
- DE-A1- 3 837 118
- US-B1- 6 436 330
- US-B1- 6 520 318

## Beschreibung

### Technisches Gebiet

Die vorliegende Erfindung betrifft eine Vorrichtung zum Behandeln mindestens eines Behälters, bevorzugt zum Befüllen und/oder Verschließen eines Behälters, beispielsweise eines Getränkebehälters, sowie eine Getränkeabfüllanlage.

### Stand der Technik

Bei Getränkeabfüllanlagen mit einer herkömmlichen Abfolge von nacheinander geschalteten Karussellen zur Behandlung von Behältern werden die zu behandelnden Behälter zwischen den Karussellen, in welchen die Behälter einer Behandlung unterzogen werden, üblicherweise mittels Transportsternen transportiert. Beispielsweise werden zu befüllende Behälter in einem Rundläuferfüller in einem Füllerkarussell mit dem abzufüllenden Füllprodukt befüllt und die dann befüllten Behälter in einem nachgelagerten Rundläuferverschließer in einem Verschließerkarussell verschlossen. Der Transfer der befüllten Behälter zwischen dem Füllerkarussell und dem Verschließerkarussell findet mittels eines oder mehrerer Transportsterne statt, wodurch der Material- und Ressourceneinsatz sowie die benötigte Grundfläche erhöht werden und die Investitionskosten steigen. Bei Anlagen mit hoher Leistung kann es bei der Übergabe der Behälter von einem Füllerkarussell an einen Füllerauslaufstern und/oder bei der Übergabe von einem Transportstern an ein Verschließerkarussell aufgrund des auftretenden Lastwechsels des Behälters und des darin aufgenommenen Füllprodukts beziehungsweise der schlagartigen Änderung der auf das Füllprodukt wirkenden Zentrifugalkräfte zum Herausschwappen des Füllprodukts kommen. Dieses unerwünschte Verhalten tritt besonders bei Transportsternen mit Durchmessern auf, die aus Gründen der gewünschten Kompaktheit der Anlage kleiner sind, als die Durchmesser des Füllerkarussells und des Verschließerkarussells. Durch das Zwischenschalten von Transportsternen ergeben sich darüber hinaus auch weitere Umlenkungen und Übergaben der Behälter zwischen unterschiedlichen Rundläufern im Behälterweg, die entsprechend bei jeder Umlenkung und bei jeder Übergabe zu einem Richtungswechsel der auf das Füllprodukt wirkenden Kräfte und damit zu einer erhöhten Neigung zum Überschwappen führen. Die Umlenkungen und Übergaben können weiterhin auch zu einer erhöhten Materialbeanspruchung der Behälter führen, welche sich in unerwünschten Kratzern oder matten Stellen auf dem befüllten und verschlossenen Behälter zeigen kann. Zudem kommt es bei hohen Maschinenleistungen bei der Übergabe zwischen Füller und Verschließer häufig zum Überschwappen des im unverschlossenen Behälter eingefüllten Füllguts. Zudem ist ein Einbringen von zusätzlichen Stoffen wie beispielsweise Stickstoff in den Kopfraum des befüllten Behälters zur nachfolgenden Stabilisierung der Behälter bei nichtkarbonisierten Getränken bei hoher Leistung anspruchsvoll, da der Behälter nur in einem sehr kurzen Zeitfenster unter der Dosiereinheit zwischen Füller und Verschließer verweilt und fernerhin der Stickstoff später auch durch das Schwappen zumindest teilweise wieder aus dem Behälter verdrängt wird.

Entsprechend sind Vorrichtungen zum Verschließen von Behältern bekannt, bei welchen die Behälterhalterungen zum Übernehmen oder Übergeben eines Behälters an einem Transportkarussell bezüglich einer zentralen Rotationsachse des Karussells radial bewegbar angeordnet sind. Derartige Vorrichtungen sind beispielsweise der DE 10 2016 106 378 A1, die eine Vorrichtung gemäß dem Oberbegriff des Anspruchs 1 offenbart, oder der EP 3 199490 B1 zu entnehmen. Bei diesen Anlagen muss der Füller eine größere Teilung aufweisen als der Verschließer, da die Teilung des Füllers der Teilung der Behälterhalterungen des Verschließers im radial ausgefahrenen Zustand der Behälterhalterungen entsprechen muss, um eine Übergabe der Behälter vom Füller an den Verschließer zu gewährleisten. Entsprechend ist die Teilung am Füller meist größer als durch die Größe der Füllvorrichtungen und der Größe der Behälter erforderlich.

Die US 6,436,330 B1 beschreibt ein Verfahren und eine Vorrichtung zum Herstellen von etikettierten Kunststoffflaschen. Die EP 1 268 161 B1 beschreibt ein Verfahren und eine Vorrichtung zum Wenden von Blas-Vorformlingen in einem Einlaufstern.

### Darstellung der Erfindung

Ausgehend von dem bekannten Stand der Technik ist es eine Aufgabe der vorliegenden Erfindung, eine verbesserte Vorrichtung zum Behandeln mindestens eines Behälters, bevorzugt zum Befüllen und/oder Verschließen eines Behälters, sowie eine verbesserte Getränkeabfüllanlage bereitzustellen.

Die Aufgabe wird durch eine Vorrichtung zum Behandeln mindestens eines Behälters, bevorzugt zum Befüllen und/oder Verschließen eines Behälters, mit den Merkmalen des Anspruchs 1 gelöst. Vorteilhafte Weiterbildungen ergeben sich aus den Unteransprüchen, der Beschreibung und den Figuren.

Entsprechend wird eine Vorrichtung zum Behandeln mindestens eines Behälters, bevorzugt zum Befüllen und/oder Verschließen eines Behälters, vorgeschlagen, umfassend ein um eine Drehachse drehbares Karussell mit mindestens einer im Umfangsbereich des Karussells angeordneten Behandlungseinheit zum Behandeln des zu behandelnden Behälters und eine am Karussell angeordnete, der Behandlungseinheit zugeordnete Behälterhalterung zum Halten des Behälters, wobei die Behälterhalterung radial zur Drehachse bewegbar ausgebildet ist. Erfindungsgemäß ist die Behälterhalterung gegenüber dem Karussell um eine von der Drehachse beabstandete, parallel zur Drehachse orientierte Schwenkachse schwenkbar ausgebildet.

Dadurch, dass die Behälterhalterung gegenüber dem Karussell um eine von der Drehachse beabstandete, parallel zur Drehachse orientierte Schwenkachse schwenkbar ausgebildet ist, kann die Behälterhalterung bezüglich einer rein radial ausgefahrenen Position verschwenkt werden. Mit anderen Worten ist die Position der Behälterhalterung zumindest in einer radial ausgefahrenen Position durch ein Schwenken um die Schwenkachse variabel ausgebildet. Durch die Schwenkbewegung kann mithin die Position der Behälterhalterung in radial ausgefahrener Position auf eine Behälterhalterung an einem der Vorrichtung vorgelagerten Transportvorrichtung, beispielsweise einem Füllerkarussell, und/oder einer der Vorrichtung nachgelagerten Vorrichtung angepasst werden. Entsprechend ist etwa nicht erforderlich, dass ein vorgelagertes Füllerkarussell eine Teilung aufweist, wie sie die Behälterhalterungen in der radial ausgefahrenen Position bei rein radialer Bewegung aufweisen würden. Die Teilung des Füllers kann mithin im Wesentlichen unabhängig von der Teilung der hier vorgeschlagenen Vorrichtung ausgebildet sein. Anders ausgedrückt kann ein Unterschied einer Teilung der Vorrichtung und einer Teilung des Füllerkarussells durch die Schwenkbewegung der Behälterhalterung ausgeglichen werden. Es hat sich hierbei als vorteilhaft herausgestellt, wenn die Teilung des Karussells der Vorrichtung der Teilung des Füllerkarussells entspricht.

Vorzugsweise ist die Behandlungseinheit in Form einer Füllvorrichtung zum Befüllen eines Behälters oder in Form einer Verschließvorrichtung zum Verschließen eines Behälters mit einem Behälterverschluss ausgebildet. Die Vorrichtung entspricht dann entsprechend einem Füllerkarussell beziehungsweise einem Verschließerkarussell beziehungsweise ist in Form eines solchen ausgebildet.

Vorzugsweise ist die Behälterhalterung ist in Bezug auf die Drehachse nach radial außen orientiert.

Gemäß einer weiteren bevorzugten Ausführungsform ist die Behälterhalterung in Bezug auf die Drehachse zwischen einer radial ausgefahrenen Position zum Aufnehmen und/oder Übergeben eines Behälters und einer radial eingefahrenen Position bewegbar, wobei bevorzugt die radial eingefahrene Position in Bezug auf die Drehachse auf einem Teilkreisdurchmesser positioniert ist, auf welchem die Behälterbehandlungseinheit angeordnet ist.

Es hat sich als vorteilhaft herausgestellt, wenn die Behälterhalterung in der radial ausgefahrenen Position gegenüber der radial inneren Position um einen vorgegebenen Schwenkwinkel φ in Drehsinn des Karussells um die Schwenkachse verschwenkt ist.

Vorzugsweise ist die Behälterhalterung in der radial eingefahrenen Position in Bezug auf die Drehachse in radialer Richtung nach außen orientiert. Entsprechend ist die Behälterhalterung dann in der radial ausgefahrenen Position in Bezug auf die Drehachse von der radialen Richtung um den vorgegebenen Schwenkwinkel in Drehsinn des Karussells um die Schwenkachse verschwenkt orientiert.

Gemäß einer weiteren bevorzugten Ausführungsform ist eine feststehende Führung zum Führen der Bewegung der Behälterhalterung radial zur Drehachse vorgesehen. Vorzugsweise ist dabei ein mit der Behälterhalterung verbundenes Führungselement mit der Führung in Eingriff.

Alternativ oder zusätzlich kann eine an dem Karussell angeordnete Schwenkführung zum Führen der Schwenkbewegung der Behälterhalterung um die Schwenkachse vorgesehen sein, wobei bevorzugt ein mit der Behälterhalterung verbundenes Schwenkführungselement mit der Schwenkführung in Eingriff ist.

Vorzugsweise ist die Schwenkführung einer bestimmten Behälterhalterung zugeordnet und/oder ist die Schwenkführung mitdrehend an dem Karussell angeordnet.

Alternativ kann die Bewegung der Behälterhalterung radial zur Drehachse und/oder die Schwenkbewegung der Behälterhalterung um die Schwenkachse über eine jeweilige Antriebseinheit bereitgestellt sein. So kann das Karussell eine Antriebseinheit, bevorzugt eine Lineareinheit, zum Bewegen der Behälterhalterung radial zur Drehachse und/oder eine Antriebseinheit, bevorzugt ein Rotationsantrieb, besonders bevorzugt ein Servomotor, zum Schwenken der Behälterhalterung um die Schwenkachse aufweisen.

Gemäß der Erfindung ist die Behälterhalterung auf einer in Bezug auf die Drehachse radial entfernten Seite eines am Karussell angeordneten Haltearms angebracht. Vorzugsweise ist hierbei die Schwenkachse an dem Haltearm beabstandet, bevorzugt mit einem festen Abstand, von der Behälterhalterung angeordnet.

Der Haltearm ist um die Schwenkachse schwenkbar an einem am Karussell radial verschiebbaren Schlitten angeordnet, wobei bevorzugt die schwenkbare Anbindung des Haltearms am Schlitten auf einer in Bezug auf die Drehachse radial inneren Seite des Haltearms angeordnet ist, wobei bevorzugt der Schlitten das Führungselement umfasst und der Haltearm das Schwenkführungselement umfasst.

Gemäß einer weiteren bevorzugten Ausführungsform ist eine Mehrzahl von Behandlungseinheiten mit gleichmäßiger Teilung entlang eines vorgegebenen Teilkreisdurchmessers relativ zur Drehachse am Karussell angeordnet, wobei die Teilung bevorzugt einem Abstand zwischen zwei benachbarten Behandlungseinheiten in Umfangsrichtung entspricht, besonders bevorzugt einem bedingt durch die Behandlungseinheiten und/oder zu behandelnden Behälter minimal möglichen Abstand in Umfangsrichtung entspricht. Vorzugsweise ist hierbei jeder der Behandlungseinheiten eine Behälterhalterung zugeordnet.

Gemäß einer weiteren bevorzugten Ausführungsform entspricht die Teilung entlang eines beziehungsweise des vorgegebenen Teilkreisdurchmessers einer Teilung entlang eines Behandlungsteilkreisdurchmessers eines eine Mehrzahl von weiteren Behandlungseinheiten aufweisenden, dem Karussell vorgelagerten oder dem Karussell nachgelagerten weiteren Karussells.

Gemäß einer weiteren bevorzugten Ausführungsform ist die Behälterhalterung derart geführt, dass sie in einem vorgegebenen Dropplerbereich zum Eindosieren eines Stoffes in den befüllten Behälter, beispielsweise zum Eintropfen von flüssigem Stickstoff in den Kopfraum des befüllten Behälters, entgegen des Drehsinns des Karussells geschwenkt wird, so dass die Behälterhalterung mit einer vorgegebenen Verweilzeit im Dropplerbereich positioniert ist. Dadurch kann erzielt werden, dass ein ausreichender Eintrag des einzudosierenden Stoffes, beispielsweise Stickstoff, in den Kopfraum des Behälters eingebracht wird.

Gemäß einer weiteren bevorzugten Ausführungsform umfasst die Vorrichtung eine Flaschenorientierungsvorrichtung zum Ausrichten des zu behandelnden Behälters in eine vorgegebene Orientierung in Bezug auf seine Längsrichtung, wobei die Flaschenorientierungsvorrichtung bevorzugt einen neben dem Karussell angeordneten Reibstern umfasst, welcher eine Kontakteinheit zum Drehen des in der Behälterhalterung gehaltenen Behälters um seine Längsrichtung via eines Reibkontaktes aufweist, und/oder die Flaschenorientierungsvorrichtung eine Drehsteuerung zum Drehen eines Drehtellers der Behälterhalterung oder zum Drehen eines Behandlungskopfes der Behandlungseinheit umfasst. Dadurch kann die Orientierung des Behälters in der Vorrichtung und/oder bei der Übergabe auf eine Auslauftransportvorrichtung, welche den behandelten Behälter vor der Vorrichtung übernimmt, vorgegeben werden. Insbesondere bei Formbehältern, beispielsweise Formflaschen, kann so die Ausrichtung des Behälters exakt vorgegeben werden.

Die oben gestellte Aufgabe wird weiterhin durch eine Getränkeabfüllanlage mit den Merkmalen des Anspruchs 10 gelöst. Vorteilhafte Weiterbildungen ergeben sich aus den Unteransprüchen sowie der vorliegenden Beschreibung und den Figuren.

Entsprechend wird eine Getränkeabfüllanlage vorgeschlagen, umfassend ein Füllerkarussell mit einer Mehrzahl von mit gleichmäßiger Teilung entlang eines Füller-Teilkreisdurchmessers angeordneten Füllvorrichtungen zum Befüllen eines Behälters und ein Verschließerkarussell mit einer Mehrzahl von mit gleichmäßiger Teilung entlang eines Verschließer-Teilkreisdurchmessers angeordneten Verschließvorrichtungen zum Verschließen eines Behälters mit einem Behälterverschluss. Erfindungsgemäß umfasst das Verschließerkarussell und/oder das Füllerkarussell eine Vorrichtung gemäß einem der vorstehenden Ausführungsformen.

Dadurch, dass das Verschließerkarussell und/oder das Füllerkarussell eine Vorrichtung gemäß einem der vorstehenden Ausführungsformen umfasst, können die hinsichtlich der Vorrichtung oben beschriebenen Vorteile und Wirkungen analog auch durch die Getränkeabfüllanlage erzielt werden. Bevorzugt ist das Verschließerkarussell dem Füllerkarussell in Förderrichtung der Behälter direkt nachgelagert. Mit anderen Worten ist kein Transferstern zwischen Füllerkarussell und Verschließerkarussell vorgesehen.

Gemäß einer bevorzugten Ausführungsform sind die Teilung des Füllerkarussells und die Teilung des Verschließerkarussells gleich groß, wobei die Teilung der Karusselle sich jeweils auf einen Teilkreisdurchmesser, auf welchem die jeweiligen Behandlungseinheiten der jeweiligen Karussells angeordnet sind, beziehen.

### Kurze Beschreibung der Figuren

Bevorzugte weitere Ausführungsformen der Erfindung werden durch die nachfolgende Beschreibung der Figuren näher erläutert. Dabei zeigen:
- Figur 1: schematisch eine Draufsicht einer Getränkeabfüllanlage gemäß einer bevorzugten Ausführung der Erfindung; und
- Figur 2: schematisch eine einer Getränkeabfüllanlage gemäß einer weiteren bevorzugten Ausführung.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen versehen, und auf eine wiederholte Beschreibung dieser Elemente wird teilweise verzichtet, um Redundanzen zu vermeiden.

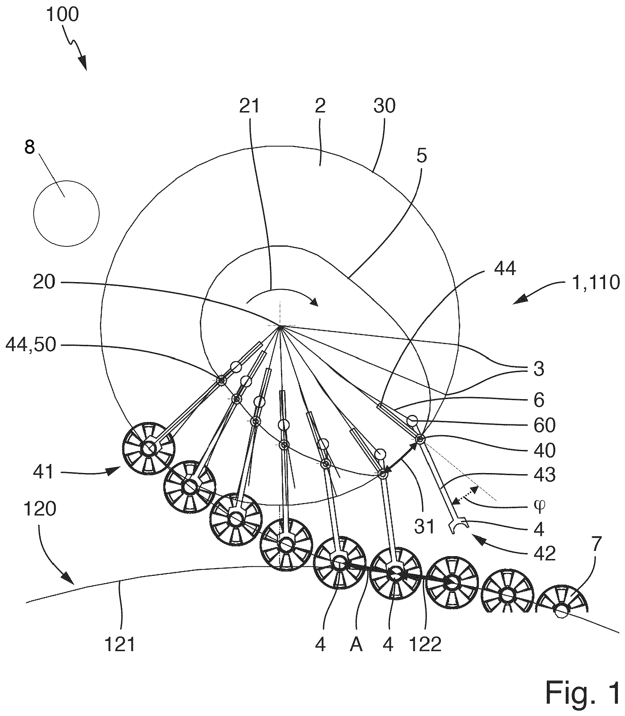

In Figur 1 ist schematisch eine Draufsicht einer Getränkeabfüllanlage 100 gemäß einer bevorzugten Ausführung der Erfindung gezeigt. Die Getränkeabfüllanlage 100 umfasst ein sehr schematisch angedeutetes Füllerkarussell 120 mit einer Mehrzahl von mit gleichmäßiger Teilung 122 entlang eines Füller-Teilkreisdurchmessers 121 angeordneten Füllvorrichtungen (nicht gezeigt) zum Befüllen eines Behälters 7, sowie ein Verschließerkarussell 110.

Das Verschließerkarussell 110 umfasst eine Vorrichtung 1 zum Behandeln mindestens eines Behälters, hier ausgebildet zum Verschließen von Behältern 7. Die Vorrichtung 1 umfasst ein um eine Drehachse 20 drehbares Karussell 2 mit einer Mehrzahl von mit gleichmäßiger Teilung 31 entlang eines Teilkreisdurchmessers 30 angeordneten Behandlungseinheiten 3 in Form von Verschließvorrichtungen zum Verschließen eines Behälters 7 mit einem Behälterverschluss, die im Umfangsbereich des Karussells 2 angeordnet sind. Ferner umfasst die Vorrichtung 1 eine Mehrzahl von an Karussell 2 angeordneten, jeweils einer Behandlungseinheit 3 zugeordneten Behälterhalterungen 4 zum Halten eines Behälters 7, wobei die Behälterhalterungen 4 radial zur Drehachse 20 bewegbar ausgebildet sind.

Ferner ist jede Behälterhalterung 4 gegenüber dem Karussell 2 um eine von der Drehachse 20 beabstandete, parallel zur Drehachse 20 orientierte Schwenkachse 40 schwenkbar ausgebildet.

Vorliegend ist das Karussell 2 als Verschließerkarussell ausgebildet und dem Füllerkarussell 120 in Förderrichtung der Behälter 7 direkt nachgelagert. Mit anderen Worten ist kein Transferstern zur Übergabe von Behältern zwischen dem Füllerkarussell 120 und dem Verschließer-Karussell 2 vorgesehen.

Die Behälterhalterungen 4 sind in Bezug auf die Drehachse 20 im Wesentlichen nach radial außen orientiert.

Die Teilung 31 entspricht einem Abstand zwischen zwei benachbarten Behandlungseinheiten 3 in Umfangsrichtung des Karussells 2. Vorliegend entspricht die Teilung 31 einem bedingt durch die Behandlungseinheiten 3 und zu behandelnden Behälter 7 minimal möglichen Abstand in Umfangsrichtung des Karussells 2.

In Bezug auf die Drehachse 20 ist jede Behälterhalterung 4 zwischen einer radial ausgefahrenen Position 42 zum Aufnehmen eines Behälters 7 vom Füllerkarussell 120 und einer radial eingefahrenen Position 41 bewegbar, wobei die radial eingefahrene Position 41 in Bezug auf die Drehachse 20 auf dem Teilkreisdurchmesser 30 positioniert ist, auf welchem die Behälterbehandlungseinheiten 3 angeordnet sind.

Eine Behälterhalterung 4 ist in ihrer radial ausgefahrenen Position 42 gegenüber ihrer radial inneren Position 41 um einen vorgegebenen Schwenkwinkel φ in Drehsinn 21 des Karussells 2, welcher der Transportrichtung der Behälter 7 durch die Getränkeabfüllanlage 100 entspricht, um die Schwenkachse 40 verschwenkt.

Hierbei ist die Behälterhalterung 4 in der radial eingefahrenen Position 41 in Bezug auf die Drehachse 20 in radialer Richtung nach außen orientiert. Entsprechend ist die Behälterhalterung 4 in der radial ausgefahrenen Position 42 in Bezug auf die Drehachse 20 von der radialen Richtung um den vorgegebenen Schwenkwinkel φ in Drehsinn 21 des Karussells um die Schwenkachse 40 verschwenkt orientiert.

Zum Führen der Bewegung der Behälterhalterungen 4 radial zur Drehachse 20 ist eine feststehende Führung 5 vorgesehen, relativ zu welcher sich das Karussell 2 dreht. Hierbei ist jeweils ein mit einer Behälterhalterung 4 verbundenes Führungselement 50 mit der Führung 5 in Eingriff.

Zudem ist jeder Behälterhalterung 4 eine an dem Karussell 2 angeordnete Schwenkführung 6 zum Führen der Schwenkbewegung der jeweiligen Behälterhalterung 4 um die Schwenkachse 40 zugeordnet, wobei ein mit der Behälterhalterung 4 verbundenes Schwenkführungselement 60 mit der Schwenkführung 6 in Eingriff ist.

Vorliegend ist jede Behälterhalterung 4 auf einer in Bezug auf die Drehachse 20 radial entfernten Seite eines am Karussell 2 angeordneten Haltearms 43 angebracht, wobei der Haltearm 43 um die Schwenkachse 40 schwenkbar an einem am Karussell 2 radial verschiebbaren Schlitten 44 angeordnet ist. Hierbei ist die schwenkbare Anbindung des Haltearms 43 am Schlitten 44 auf einer in Bezug auf die Drehachse 20 radial inneren Seite des Haltearms 43 angeordnet. Ferner umfasst vorliegend der Schlitten 44 das Führungselement 50 und der Haltearm 43 das Schwenkführungselement 60.

Alternativ kann der Haltearm 43 auch um die Schwenkachse 40 schwenkbar am Karussell 2 angeordnet sein und mit einem am Karussell 2 radial verschiebbaren Schlitten 44 verbunden sein, wobei die Verbindung zwischen Haltearm 43 und Schlitten 44 dann bevorzugt auf einer in Bezug auf die Drehachse 20 radial inneren Seite des Haltearms 43 angeordnet ist, wobei bevorzugt der Haltearm 43 das Führungselement 50 und das Schwenkführungselement 60 umfasst.

Gemäß der Ausführungsform aus Figur 1 sind die Teilung 122 des Füllerkarussells 120 und die Teilung 31 des Karussells 2 gleich groß.

Durch ein Schwenken der Behälteraufnahme 4 in Drehsinn 21 kann ein Abstand A zwischen zwei benachbarten Behälterhalterungen 4 auf die Teilung 122 angepasst werden.

Die Behälterhalterung 4 ist vorliegend optional derart geführt, dass sie in einem vorgegebenen Dropplerbereich (nicht gezeigt), welcher zwischen dem Übernahmepunkt der Behälter 7 von dem Füllerkarussell 120 und der eingefahrenen Position 41 angeordnet ist, entgegen des Drehsinns 21 des Karussells 2 geschwenkt wird, so dass die Behälterhalterung 4 mit einer vorgegebenen Verweilzeit im Dropplerbereich positioniert ist.

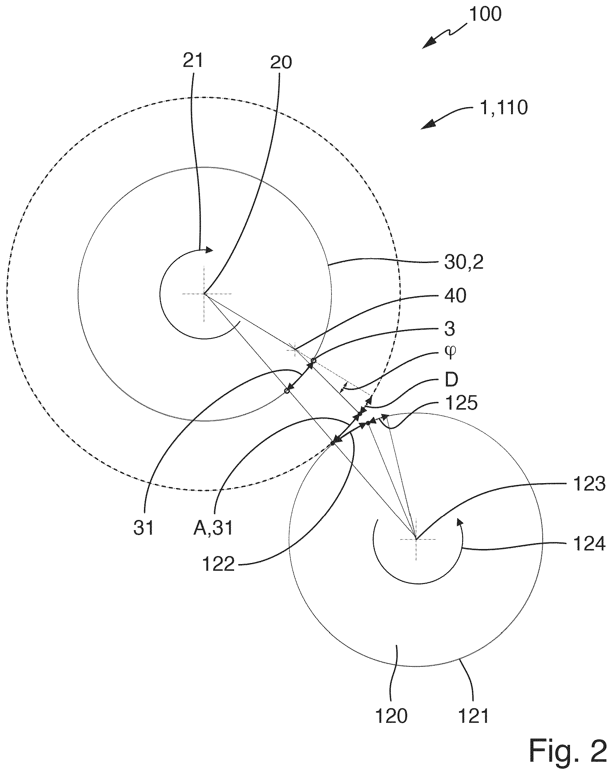

Figur 2 zeigt schematisch eine einer Getränkeabfüllanlage 100 gemäß einer weiteren bevorzugten Ausführung. Die Getränkeabfüllanlage 100 entspricht im Wesentlichen jeder aus Figur 1, wobei hier der Teilkreisdurchmesser 121 des Füllerkarussells 120 verkleinert dargestellt ist, so dass der Teilkreisdurchmesser 121 komplett, sowie eine Drehachse 123 und ein Drehsinn 124 des Füllerkarussells 120 abgebildet sind.

Durch das Schwenken der Behälterhalterungen 4, wie oben beschrieben, kann in Vergleich zu einer hypothetischen rein radialen Bewegbarkeit der Behälterhalterungen 4 der Abstand A um einen Differenzbetrag D verringert werden, so dass der Abstand A auf die Teilung 122 des Füllerkarussells 120 angepasst werden kann. Anders betrachtet ist nicht erforderlich, dass die Teilung 122 auf die Teilung 31 zuzüglich des Differenzbetrages D angepasst ist, wie bei herkömmlichen Anlagen der Fall. Entsprechend kann die Teilung 122 in Vergleich zu herkömmlichen Anlagen um einen Differenzbetrag 125 kleiner ausgebildet sein, welcher bei rein radialer Bewegbarkeit der Behälterhalterungen 4 der Teilung 122 aufzuaddieren wäre. Vorliegend sind die Beträge der Teilung 31 und der Teilung 122 gleich groß ausgebildet. Weiterhin sind die Teilung 31 und der Abstand A gleich groß.

Die Vorrichtung 1 umfasst hier ferner eine optionale Flaschenorientierungsvorrichtung 8 zum Ausrichten des zu behandelnden Behälters 7 in eine vorgegebene Orientierung in Bezug auf die Längsrichtung des Behälters 7, welche sich vorliegend parallel zur Drehachse 20 erstreckt. Vorliegend umfasst die Flaschenorientierungsvorrichtung 8 einen neben dem Karussell 2 angeordneten Reibstern, welcher eine Kontakteinheit zum Drehen des in der Behälterhalterung 4 gehaltenen Behälters 7 um seine Längsrichtung via eines Reibkontaktes mit der Mantelfläche des Behälters 7 aufweist. Alternativ oder zusätzlich kann die Flaschenorientierungsvorrichtung 8 auch eine Drehsteuerung zum Drehen eines Drehtellers der Behälterhalterung oder zum Drehen eines Behandlungskopfes der Behandlungseinheit 3 umfassen.

### Bezugszeichenliste

- 1: Vorrichtung
- 2: Karussell
- 20: Drehachse
- 21: Drehsinn
- 3: Behandlungseinheit
- 30: Teilkreisdurchmesser
- 31: Teilung
- 4: Behälterhalterung
- 40: Schwenkachse
- 41: Radial eingefahrene Position
- 42: Radial ausgefahrene Position
- 43: Haltearm
- 44: Schlitten
- 5: Führung
- 50: Führungselement
- 6: Schwenkführung
- 60: Schwenkführungselement
- 7: Behälter
- 8: Flaschenorientierungsvorrichtung

- φ: Schwenkwinkel
- A: Abstand
- D: Differenzbetrag

- 100: Vorrichtung
- 110: Verschließerkarussell
- 120: Füllerkarussell
- 121: Teilkreisdurchmesser
- 122: Teilung
- 123: Drehachse
- 124: Drehsinn
- 125: Differenzbetrag

## Patentansprüche

1. Vorrichtung (1) zum Behandeln mindestens eines Behälters (7), bevorzugt zum Befüllen und/oder Verschließen eines Behälters (7), umfassend ein um eine Drehachse (20) drehbares Karussell (2) mit mindestens einer im Umfangsbereich des Karussells (2) angeordneten Behandlungseinheit (3) zum Behandeln des zu behandelnden Behälters (7) und eine am Karussell (2) angeordnete, der Behandlungseinheit (3) zugeordnete Behälterhalterung (4) zum Halten des Behälters (7), wobei
die Behälterhalterung (4) radial zur Drehachse (20) bewegbar ausgebildet und auf einer in Bezug auf die Drehachse (20) radial entfernten Seite eines am Karussell (2) angeordneten Haltearms (43) angebracht ist,
**dadurch gekennzeichnet, dass**
die Behälterhalterung (4) gegenüber dem Karussell (2) um eine von der Drehachse (20) beabstandete, parallel zur Drehachse (20) orientierte Schwenkachse (40) schwenkbar ausgebildet ist, und
der Haltearm (43) um die Schwenkachse (40) schwenkbar an einem am Karussell (2) radial verschiebbaren Schlitten (44) angeordnet ist.

2. Vorrichtung (1) gemäß Anspruch 1, **dadurch gekennzeichnet, dass** die Behälterhalterung (4) in Bezug auf die Drehachse (20) zwischen einer radial ausgefahrenen Position (42) zum Aufnehmen und/oder Übergeben eines Behälters (7) und einer radial eingefahrenen Position (41) bewegbar ist, wobei bevorzugt die radial eingefahrene Position (41) in Bezug auf die Drehachse (20) auf einem Teilkreisdurchmesser (30) positioniert ist, auf welchem die Behälterbehandlungseinheit (3) angeordnet ist.

3. Vorrichtung (1) gemäß dem vorstehenden Anspruch, **dadurch gekennzeichnet, dass** die Behälterhalterung (4) in der radial ausgefahrenen Position (42) gegenüber der radial eingefahrenen Position (41) um einen vorgegebenen Schwenkwinkel (φ) in Drehsinn (21) des Karussells (2) um die Schwenkachse (40) verschwenkt ist.

4. Vorrichtung (1) gemäß dem vorstehenden Anspruch, **dadurch gekennzeichnet, dass** die Behälterhalterung (4) in der radial eingefahrenen Position (41) in Bezug auf die Drehachse (20) in radialer Richtung nach außen orientiert ist.

5. Vorrichtung (1) gemäß einem der vorstehenden Ansprüche, **dadurch gekennzeichnet, dass** eine feststehende Führung (5) zum Führen der Bewegung der Behälterhalterung (4) radial zur Drehachse (20) vorgesehen ist, wobei bevorzugt ein mit der Behälterhalterung (4) verbundenes Führungselement (50) mit der Führung (5) in Eingriff ist, und/oder eine an dem Karussell (2) angeordnete Schwenkführung (6) zum Führen der Schwenkbewegung der Behälterhalterung (4) um die Schwenkachse (40) vorgesehen ist, wobei bevorzugt ein mit der Behälterhalterung (4) verbundenes Schwenkführungselement (60) mit der Schwenkführung (6) in Eingriff ist.

6. Vorrichtung (1) gemäß einem der vorstehenden Ansprüche, **dadurch gekennzeichnet, dass** die schwenkbare Anbindung des Haltearms (43) am Schlitten (44) auf einer in Bezug auf die Drehachse (20) radial inneren Seite des Haltearms (43) angeordnet ist, wobei bevorzugt der Schlitten (44) das Führungselement (50) umfasst und der Haltearm (43) das Schwenkführungselement (60) umfasst.

7. Vorrichtung (1) gemäß einem der vorstehenden Ansprüche, **dadurch gekennzeichnet, dass** eine Mehrzahl von Behandlungseinheiten (3) mit gleichmäßiger Teilung (31) entlang eines vorgegebenen Teilkreisdurchmessers (30) relativ zur Drehachse (20) am Karussell (2) angeordnet ist, wobei die Teilung (31) bevorzugt einem Abstand zwischen zwei benachbarten Behandlungseinheiten (3) in Umfangsrichtung entspricht, besonders bevorzugt einem bedingt durch die Behandlungseinheiten (3) und/oder zu behandelnden Behälter (7) minimal möglichen Abstand in Umfangsrichtung entspricht, und/oder die Teilung (31) entlang des Teilkreisdurchmessers (30) einer Teilung (122) entlang eines Behandlungsteilkreisdurchmessers (121) eines eine Mehrzahl von weiteren Behandlungseinheiten aufweisenden, dem Karussell (2) vorgelagerten oder dem Karussell (2) nachgelagerten weiteren Karussells (120) entspricht.

8. Vorrichtung (1) gemäß einem der vorstehenden Ansprüche, **dadurch gekennzeichnet, dass** die Behälterhalterung (4) derart geführt ist, dass sie in einem vorgegebenen Dropplerbereich entgegen des Drehsinns (21) des Karussells (2) geschwenkt wird, so dass die Behälterhalterung (4) mit einer vorgegebenen Verweilzeit im Dropplerbereich positioniert ist.

9. Vorrichtung (1) gemäß einem der vorstehenden Ansprüche, **dadurch gekennzeichnet, dass** eine Flaschenorientierungsvorrichtung (8) zum Ausrichten des zu behandelnden Behälters (7) in eine vorgegebene Orientierung in Bezug auf seine Längsrichtung vorgesehen ist, wobei die Flaschenorientierungsvorrichtung (8) bevorzugt einen neben dem Karussell (2) angeordneten Reibstern umfasst, welcher eine Kontakteinheit zum Drehen des in der Behälterhalterung gehaltenen Behälters (7) um seine Längsrichtung via eines Reibkontaktes aufweist, und/oder die Flaschenorientierungsvorrichtung (8) eine Drehsteuerung zum Drehen eines Drehtellers der Behälterhalterung (4) und/oder zum Drehen eines Behandlungskopfes der Behandlungseinheit (3) umfasst.

10. Getränkeabfüllanlage (100), umfassend ein Füllerkarussell (120) mit einer Mehrzahl von mit gleichmäßiger Teilung (122) entlang eines Füller-Teilkreisdurchmessers (121) angeordneten Füllvorrichtungen zum Befüllen eines Behälters und ein Verschließerkarussell (110) mit einer Mehrzahl von mit gleichmäßiger Teilung entlang eines Verschließer-Teilkreisdurchmessers (30) angeordneten Verschließvorrichtungen (3) zum Verschließen eines Behälters (7) mit einem Behälterverschluss,
**dadurch gekennzeichnet, dass**
das Verschließerkarussell (110) und/oder das Füllerkarussell (120) eine Vorrichtung (1) gemäß einem der vorstehenden Ansprüche umfasst.

11. Getränkeabfüllanlage gemäß dem vorstehenden Anspruch, **dadurch gekennzeichnet, dass** die Teilung (122) des Füllerkarussells (120) und die Teilung (31) des Verschließerkarussells (110) gleich groß sind.

## Claims

1. An apparatus (1) for treating at least one container (7), preferably for filling and/or closing a container (7), comprising a carousel (2) rotatable about an axis of rotation (20) with at least one treatment unit (3) arranged in the peripheral region of the carousel (2) for treating the container (7) to be treated and a container holder (4) arranged on the carousel (2) and associated with the treatment unit (3) for holding the container (7), wherein
the container holder (4) is configured to be movable radially with respect to the axis of rotation (20) and is mounted on a side of a holding arm (43) arranged on the carousel (2) that is radially distant from the axis of rotation (20),
**characterized in that**
the container holder (4) is configured to be pivotable relative to the carousel (2) about a pivot axis (40) spaced apart from the axis of rotation (20) and oriented parallel to the axis of rotation (20), and
the holding arm (43) is arranged on a carriage (44) which is radially displaceable on the carousel (2) and can pivot about the pivot axis (40).

2. The apparatus (1) according to claim 1, **characterized in that** the container holder (4) is movable with respect to the axis of rotation (20) between a radially extended position (42) for receiving and/or transferring a container (7) and a radially retracted position (41), wherein the radially retracted position (41) is preferably positioned with respect to the axis of rotation (20) on a pitch circle diameter (30) on which the container treatment unit (3) is arranged.

3. The apparatus (1) according to the preceding claim, **characterized in that** the container holder (4) is pivoted in the radially extended position (42) relative to the radially retracted position (41) by a predefined pivot angle (φ) in the direction of rotation (21) of the carousel (2) about the pivot axis (40).

4. The apparatus (1) according to the preceding claim, **characterized in that** the container holder (4) in the radially retracted position (41) is oriented radially outward with respect to the axis of rotation (20).

5. The apparatus (1) according to any of the preceding claims, **characterized in that** a fixed guide (5) is provided for guiding the movement of the container holder (4) radially with respect to the axis of rotation (20), wherein preferably a guide element (50) connected to the container holder (4) is engaged with the guide (5), and/or a pivoting guide (6) arranged on the carousel (2) is provided for guiding the pivoting movement of the container holder (4) about the pivot axis (40), wherein preferably a pivoting guide element (60) connected to the container holder (4) is engaged with the pivoting guide (6).

6. The apparatus (1) according to any of the preceding claims, **characterized in that** the pivotable connection of the holding arm (43) to the carriage (44) is arranged on a radially inner side of the holding arm (43) with respect to the axis of rotation (20), wherein preferably the carriage (44) comprises the guide element (50) and the holding arm (43) comprises the pivoting guide element (60).

7. The apparatus (1) according to any of the preceding claims, **characterized in that** a plurality of treatment units (3) is arranged on the carousel (2) with a uniform pitch (31) along a predefined pitch circle diameter (30) relative to the axis of rotation (20), wherein the pitch (31) preferably corresponds to a distance between two adjacent treatment units (3) in the circumferential direction, particularly preferably corresponds to a minimum possible distance in the circumferential direction due to the treatment units (3) and/or the container (7) to be treated, and/or the pitch (31) along the pitch circle diameter (30) corresponds to a pitch (122) along a treatment pitch circle diameter (121) of a further carousel (120) having a plurality of further treatment units arranged upstream of the carousel (2) or downstream of the carousel (2).

8. The apparatus (1) according to any of the preceding claims, **characterized in that** the container holder (4) is guided in such a way that it is pivoted in a predefined droppler region counter to the direction of rotation (21) of the carousel (2), so that the container holder (4) is positioned in the droppler region with a predefined dwell time.

9. The apparatus (1) according to any of the preceding claims, **characterized in that** a bottle orientation apparatus (8) is provided for aligning the container (7) to be treated in a predefined orientation with respect to its longitudinal direction, wherein the bottle orientation apparatus (8) preferably comprises a friction starwheel arranged next to the carousel (2), which has a contact unit for rotating the container (7) held in the container holder about its longitudinal direction via a friction contact, and/or the bottle orientation apparatus (8) comprises a rotation control for rotating a turntable of the container holder (4) and/or for rotating a treatment head of the treatment unit (3).

10. A beverage filling plant (100), comprising a filler carousel (120) with a plurality of filling apparatuses arranged with a uniform pitch (122) along a filler pitch circle diameter (121) for filling a container and a closer carousel (110) with a plurality of closing apparatuses (3) arranged with a uniform pitch along a closer pitch circle diameter (30) for closing a container (7) with a container closure,
**characterized in that**
the closer carousel (110) and/or the filler carousel (120) comprise(s) an apparatus (1) according to any of the preceding claims.

11. The beverage filling plant according to the preceding claim, **characterized in that** the pitch (122) of the filler carousel (120) and the pitch (31) of the closer carousel (110) are the same size.

## Revendications

1. Dispositif (1) permettant de traiter au moins un récipient (7), de préférence permettant de remplir et/ou fermer un récipient (7), comprenant un carrousel (2) pouvant tourner autour d'un axe de rotation (20) comportant au moins une unité de traitement (3) disposée dans la zone périphérique du carrousel (2) permettant de traiter le récipient (7) à traiter et un support de récipient (4) disposé sur le carrousel (2) et associé à l'unité de traitement (3) permettant de maintenir le récipient (7), dans lequel
le support de récipient (4) est réalisé de manière à pouvoir se déplacer radialement par rapport à l'axe de rotation (20) et est monté sur un côté, éloigné radialement par rapport à l'axe de rotation (20), d'un bras de support (43) disposé sur le carrousel (2),
**caractérisé en ce que**
le support de récipient (4) est réalisé de manière à pouvoir pivoter par rapport au carrousel (2) autour d'un axe de pivotement (40) espacé de l'axe de rotation (20) et orienté parallèlement à l'axe de rotation (20), et
le bras de support (43) est disposé de manière à pouvoir pivoter autour de l'axe de pivotement (40) sur un chariot (44) pouvant être déplacé radialement sur le carrousel (2).

2. Dispositif (1) selon la revendication 1, **caractérisé en ce que** le support de récipient (4) est mobile par rapport à l'axe de rotation (20) entre une position radialement déployée (42) permettant de recevoir et/ou transférer un récipient (7) et une position radialement rétractée (41), dans lequel de préférence la position radialement rétractée (41) est positionnée par rapport à l'axe de rotation (20) sur un diamètre de cercle primitif (30) sur lequel l'unité de traitement de récipient (3) est disposée.

3. Dispositif (1) selon la revendication précédente, **caractérisé en ce que** le support de récipient (4) est pivoté dans la position radialement déployée (42) par rapport à la position radialement rétractée (41) d'un angle de pivotement (φ) prédéfini dans le sens de rotation (21) du carrousel (2) autour de l'axe de pivotement (40).

4. Dispositif (1) selon la revendication précédente, **caractérisé en ce que** le support de récipient (4) est orienté dans la direction radiale vers l'extérieur par rapport à l'axe de rotation (20) dans la position radialement rétractée (41).

5. Dispositif (1) selon l'une des revendications précédentes, **caractérisé en ce qu'**un guide (5) fixe est prévu pour guider le mouvement du support de récipient (4) radialement par rapport à l'axe de rotation (20), dans lequel de préférence un élément de guidage (50) relié au support de récipient (4) est en prise avec le guide (5), et/ou un guide de pivotement (6) disposé sur le carrousel (2) est prévu pour guider le mouvement de pivotement du support de récipient (4) autour de l'axe de pivotement (40), dans lequel de préférence un élément de guidage de pivotement (60) relié au support de récipient (4) est en prise avec le guide de pivotement (6).

6. Dispositif (1) selon l'une des revendications précédentes, **caractérisé en ce que** la liaison pivotante du bras de support (43) au chariot (44) est disposée sur un côté radialement interne du bras de support (43) par rapport à l'axe de rotation (20), dans lequel de préférence le chariot (44) comprend l'élément de guidage (50) et le bras de support (43) comprend l'élément de guidage de pivotement (60).

7. Dispositif (1) selon l'une des revendications précédentes, **caractérisé en ce qu'**une pluralité d'unités de traitement (3) est disposée sur le carrousel (2) avec un pas (31) régulier le long d'un diamètre de cercle primitif (30) prédéfini par rapport à l'axe de rotation (20), dans lequel le pas (31) correspond de préférence à une distance entre deux unités de traitement (3) voisines dans la direction périphérique, de manière particulièrement préférée à une distance minimale possible dans la direction périphérique en raison des unités de traitement (3) et/ou des récipients (7) à traiter, et/ou le pas (31) le long du diamètre du cercle primitif (30) correspond à un pas (122) le long d'un diamètre du cercle primitif de traitement (121) d'un autre carrousel (120) présentant une pluralité d'autres unités de traitement, placé en amont du carrousel (2) ou en aval du carrousel (2).

8. Dispositif (1) selon l'une des revendications précédentes, **caractérisé en ce que** le support de récipient (4) est guidé de telle sorte qu'il pivote dans une zone d'injection prédéfinie à l'encontre du sens de rotation (21) du carrousel (2), de sorte que le support de récipient (4) est positionné dans la zone d'injection avec un temps de séjour prédéfini.

9. Dispositif (1) selon l'une des revendications précédentes, **caractérisé en ce qu'**un dispositif d'orientation de bouteille (8) est prévu pour orienter le récipient (7) à traiter dans une orientation prédéfinie par rapport à sa direction longitudinale, dans lequel le dispositif d'orientation de bouteille (8) comprend de préférence une étoile de friction disposée à côté du carrousel (2), qui présente une unité de contact pour faire tourner le récipient (7) supporté dans le support de récipient autour de sa direction longitudinale par l'intermédiaire d'un contact de friction, et/ou le dispositif d'orientation de bouteille (8) comprend une commande de rotation permettant de faire tourner un plateau tournant du support de récipient (4) et/ou permettant de faire tourner une tête de traitement de l'unité de traitement (3).

10. Machine d'embouteillage de boissons (100) comprenant un carrousel de remplissage (120) comportant une pluralité de dispositifs de remplissage disposés avec un pas (122) régulier le long d'un diamètre de cercle primitif de remplissage (121) permettant de remplir un récipient et un carrousel de fermeture (110) comportant une pluralité de dispositifs de fermeture (3) disposés avec un pas régulier le long d'un diamètre de cercle primitif de fermeture (30) permettant de fermer un récipient (7) avec une fermeture de récipient,
**caractérisée en ce que**
le carrousel de fermeture (110) et/ou le carrousel de remplissage (120) comprend un dispositif (1) selon l'une des revendications précédentes.

11. Machine d'embouteillage de boissons selon la revendication précédente, **caractérisée en ce que** le pas (122) du carrousel de remplissage (120) et le pas (31) du carrousel de bouchage (110) sont de même taille.
